(19) Europäisches Patentamt
European Patent Office
Office européen des brevets

(11) **EP 2 481 669 B1**

(12) **EUROPEAN PATENT SPECIFICATION**

(45) Date of publication and mention
of the grant of the patent:
**17.05.2017 Bulletin 2017/20**

(21) Application number: **12151061.4**

(22) Date of filing: **13.01.2012**

(51) Int Cl.:
**B64C 7/02** *(2006.01)*        **B64C 11/48** *(2006.01)*
**B64D 29/00** *(2006.01)*

(54) **Attenuation of open rotor noise**

Schalldämpfung offener Rotoren

Atténuation du bruit d'un rotor ouvert

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011 GB 201101609**

(43) Date of publication of application:
**01.08.2012 Bulletin 2012/31**

(73) Proprietor: **Rolls-Royce plc**
**London SW1E 6AT (GB)**

(72) Inventor: **Kingan, Michael**
**Southampton, Hampshire SO40 7QF (GB)**

(74) Representative: **Rolls-Royce plc**
**Intellectual Property Dept SinA-48**
**PO Box 31**
**Derby DE24 8BJ (GB)**

(56) References cited:
**DE-U1- 8 713 745        US-A- 2 918 984**
**US-A1- 2009 045 009        US-A1- 2009 202 357**

**Description**

The present invention relates to the attenuation of open rotor noise produced by an aeronautical propulsor.

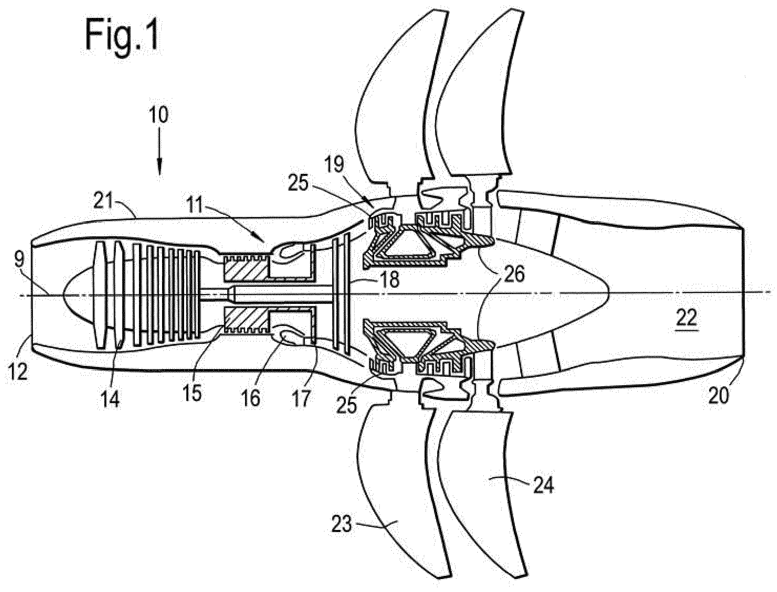

Referring to Figure 1, a twin-spooled, contra-rotating propeller, gas turbine engine is generally indicated at 10 and has a principal and rotational axis 9. The engine 10 comprises a core engine 11 having, in axial flow series, an air intake 12, an intermediate pressure compressor 14 (IPC), a high-pressure compressor 15 (HPC), combustion equipment 16, a high-pressure turbine 17 (HPT), low pressure turbine 18 (LPT), a free power turbine 19 (LPT) and a core exhaust nozzle 20. A nacelle 21 generally surrounds the core engine 11 and defines the intake 12 and nozzle 20 and a core exhaust duct 22. The engine 10 also comprises two contra-rotating, unshrouded propellers (i.e. open rotors) 23, 24 attached to and driven by the free power turbine 19, which comprises contra-rotating blade arrays 25, 26.

The gas turbine engine 10 works in a conventional manner so that air entering the intake 12 is accelerated and compressed by the IPC 14 and directed into the HPC 15 where further compression takes place. The compressed air exhausted from the HPC 15 is directed into the combustion equipment 16 where it is mixed with fuel and the mixture combusted. The resultant hot combustion products then expand through, and thereby drive the high, low-pressure and free power turbines 17, 18, 19 before being exhausted through the nozzle 20 to provide some propulsive thrust. The high, low-pressure and free power turbines 17, 18, 19 respectively drive the high and intermediate pressure compressors 15, 14 and the open rotors 23, 24 by suitable interconnecting shafts. The open rotors 23, 24 normally provide the majority of the propulsive thrust.

The engine shown in Figure 1 is one form of an open rotor aeronautical propulsor. Other forms include tractor engines, in which the open rotors are located forward of the core engine.

A problem associated with such propulsors is noise produced by the open rotors. In a high-bypass turbofan engine, the fan which produces much of the thrust is contained in a duct. This duct provides an opportunity to attenuate sound radiating from the fan. For example, the duct can be lined with acoustic panels. However, for the open rotor propulsor, there is no such surrounding duct.

US 2,918,984 discloses a sound control device for use with aircraft engines to reduce the amount of noise radiated to the aircraft fuselage or cabin, in particular by controlling the noise radiated by the exhaust system of the engine.

US 2009/202357 and DE 8713745 disclose propeller-type gas turbine engines.

US 2009/045009 discloses an acoustic liner for an aircraft including a cellular core.

An aim of the present invention is to reduce the level of noise produced by an aeronautical propulsor having one or more open rotors. The present invention is at least partly based on the realisation that propeller noise reflected off the engine nacelle can be a significant contributor to the noise level.

Accordingly, the present invention provides an aeronautical propulsor according to claim 1.

The acoustic treatment can significantly reduce the level of "interaction tones" which are produced by the interaction of an open rotor with the unsteady flow field produced by an adjacent contra-rotating open rotor, or by a steady distortion such as pylon wake or engine exhaust.

The propulsor may have any one or, to the extent that they are compatible, any combination of the following optional features.

Typically, the core engine is a gas turbine engine.

The propulsor may have a single open rotor (i.e. a single propeller), but more typically has contra-rotating open rotors.

Preferably, the external surface of the nacelle adjacent the propellers is acoustically treated, these parts of the nacelle generally receiving the highest levels of incident open rotor noise.

Preferably, the acoustic treatment provides a reflection coefficient of at most 60%, and more preferably of at most 50% or 40%, over an appropriate range of angles of incidence and frequencies. For example, it is typically desirable to reduce the interaction tones which make the largest contribution to the total sound power (e.g. at far-field) produced by the open rotor. Further, reducing the reflection coefficient for a normal angle of incidence tends to be a productive approach for reducing the total sound power. Thus the acoustic treatment may provide a reflection coefficient of at most 60%, and more preferably of at most 50% or 40%, for a normal angle of incidence at the frequency of the interaction tone for the open rotors which makes the largest contribution to the far-field, total sound power level.

Embodiments of the invention will now be described by way of example with reference to the accompanying drawings in which:

Figure 1 shows a schematic longitudinal cross-section through a twin-spooled, contra-rotating propeller, gas turbine engine;

Figure 2 shows a model of a point force rotating around a centerbody of infinite axial extent;

Figure 3 is a plot of variation of axial loading with azimuthal angle;

Figure 4 shows three plots of far-field sound pressure against time for an observer located on the same side of the centerbody as an impulsive force, the three plots being for an acoustically treated centerbody, a rigid centerbody, and no scattering from the centerbody;

Figure 5 shows three plots of far-field sound pressure against time for an observer located on the opposite side of the centerbody as an impulsive force, the three plots being for an acoustically treated centerbody, a rigid centerbody, and no scattering from the centerbody;

Figure 6 shows three acoustic spectra plots of tone amplitude against mB for the three plots of Figure 4; and

Figure 7 shows three acoustic spectra plots of tone amplitude against mB for the three plots of Figure 5.

S. A. L. Glegg (1991) Effect of Centerbody Scattering on Propeller Noise, AIAA Journal vol. 29, pp. 572-576 has shown that specific tones, which are peculiar to open rotors operating in a nonuniform flow-field, are affected by scattering from the nacelle. This scattering has a significant effect on radiated noise levels.

However, according to the present invention, the application of a suitable acoustic treatment to the exterior nacelle surface can substantially reduce the level of the scattered field. The effectiveness of such a treatment is demonstrated by the following analysis.

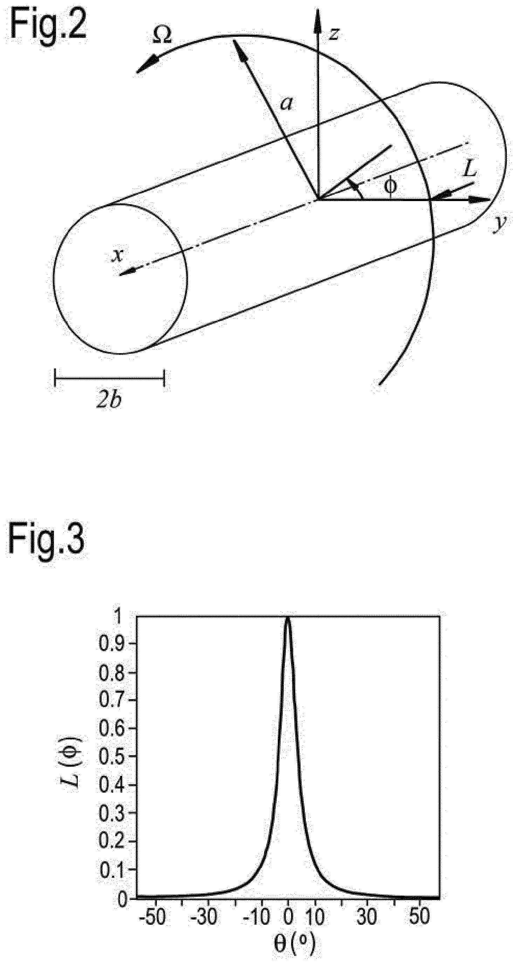

As shown schematically in Figure 2, a propeller is modelled as $B$ (where $B$ corresponds to the number of propeller blades) evenly spaced point forces which rotate with angular velocity $\Omega$ (rad/s) in a circle of radius a (m), at $x = 0$. The effects of forward motion are not included. A centerbody (i.e. engine nacelle) is modelled by a cylinder of radius b (m) having an infinite axial extent and a finite (dimensionless) surface impedance $\tilde{z}$. An observer is located a distance $|\mathbf{x}_0|$ from the centre of rotation of the rotor, at azimuthal angle $\varphi_0$ and polar angle $\theta$, the polar angle being the angle measured between a line connecting the observer with the origin and the engine axis x ($\theta = 0°$ along the positive x-axis). Although simplifications are used in the calculation given below, the analysis is sufficient to demonstrate the effectiveness of acoustically treating the centerbody. The calculation could readily be extended to include effects of forward motion and distributed loading over the blade surfaces.

Each blade is represented by a point force which is assumed to have a thrust component $L$ which acts parallel to the centerbody axis at $x = 0$, $r = a$. Glegg (*ibid*) has shown that rotor alone tones, which are associated with the steady loading and finite thickness of the propeller blades, are not significantly affected by centerbody scattering. However, for open rotor engines a significant level of noise is produced when the

loading on the propeller blades varies rapidly with azimuthal angle $\varphi_0$. This type of unsteady loading occurs when a blade passes through the wake or potential field of the adjacent propeller or a pylon. This unsteady loading can be the main source of aeroacoustic noise produced by an open rotor engine at take-off and approach. The analysis presented considers an "impulsive" force which has a maximum amplitude at $\varphi = 0°$ and is similar to the loading which would be produced by a blade passing through a rectilinear vortex located at $\varphi = 0°$ and $r = a$. The loading is described by the function $L = \varphi_s^2 /(\varphi_s^2 + \varphi^2)$, where $\varphi_s = 3.75°$. The variation in amplitude of L is shown in Figure 3.

Following the analysis of Glegg (*ibid*), but applying a finite impedance boundary condition on the surface of the cylinder (rather than the rigid boundary condition which Glegg considered) an expression for the far-field sound pressure, $p(\mathbf{x}_0, t)$, due to the rotating point force, $L$, can be derived. For completeness this expression is given below.

$$p(\mathbf{x}_o, t) = \sum_{m=1}^{\infty} p_m(\mathbf{x}_o, t)$$

$$p_m(\mathbf{x}_o, t) = \frac{mB^2 \Omega \phi_s}{4\pi c_0 |\mathbf{x}_o|} \cos\theta \left| C_{mB}^+ \right| \sin\left( mB\Omega\left( t - \frac{|\mathbf{x}_o|}{c_0} \right) - mB\left( \phi_o - \frac{\pi}{2} \right) + \gamma_s \right),$$

$$C_{mB}^+ = \sum_{k=-\infty}^{\infty} A^+ \exp\left\{ ik\left( \phi_o - \frac{\pi}{2} \right) - |k|\phi_s \right\}$$

$$\gamma_s = \arg\left( C_{mB}^+ \right)$$

$$A^{+} = J_{mB-k}\left(\frac{mB\Omega}{c_0}a\sin\theta\right) - \frac{J_{mB-k}\left(\frac{mB\Omega}{c_0}b\sin\theta\right) + i\tilde{z}\sin\theta J_{mB-k}{}'\left(\frac{mB\Omega}{c_0}b\sin\theta\right)}{H_{mB-k}^{(2)}\left(\frac{mB\Omega}{c_0}b\sin\theta\right) + i\tilde{z}\sin\theta H_{mB-k}^{(2)}{}'\left(\frac{mB\Omega}{c_0}b\sin\theta\right)}H_{mB-k}^{(2)}\left(\frac{mB\Omega}{c_0}a\sin\theta\right)$$

Where $c_0$ is the speed of sound (m/s), $t$ is time (s), $\varphi_0$ is the azimuthal angle of the observer (rad), $J$ and $H$ are well-known Bessel functions and $i = \sqrt{-1}$.

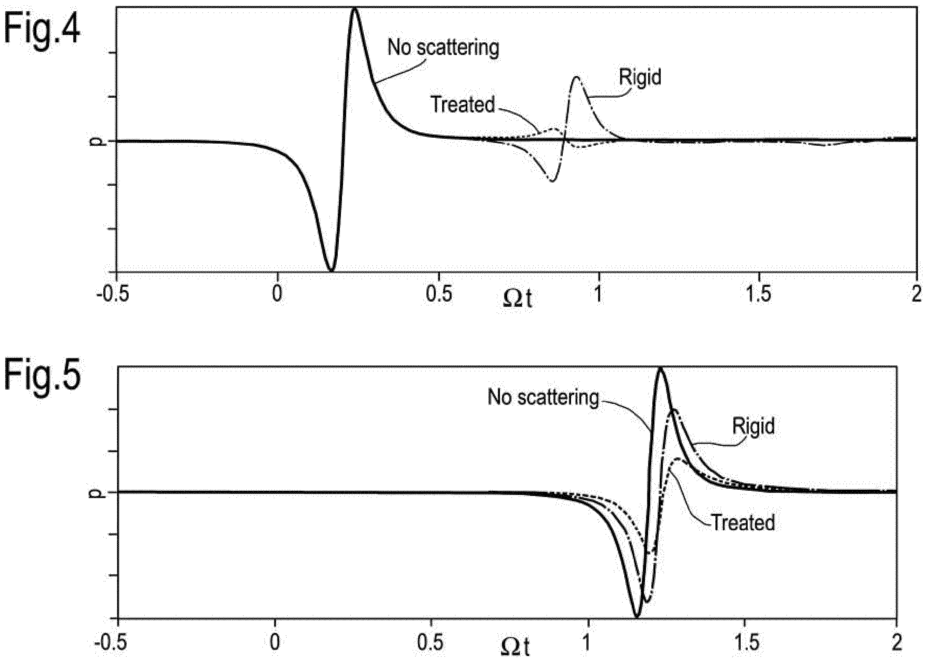

The expressions given above are used to generate far-field sound pressure plots which are shown in Figures 4 and 5 for respectively an observer location on the same side of the centerbody as the impulsive force (i.e. $\varphi_0$ = 0°) and a location on the opposite side of the centerbody as the impulsive force (i.e. $\varphi_0$ = 180°). The plots of Figures 4 and 5 are for a one-bladed propeller with $b/a$ = 0.3, $\theta$ = 45° and source Mach number 0.7. In each of Figures 4 and 5 plots of sound pressure as a function time are given for three different cases. The first case assumes an acoustically treated centerbody with surface impedance $\tilde{z}$ = 1+0.1$i$. The second case assumes a rigid (i.e. untreated) centerbody. The third case assumes no scattering from the centerbody.

Considering Figure 4 (observer location on the same side of the centerbody as the impulsive force), all three predictions show an almost identical acoustic pulse at about 0.2 s associated with a direct wave propagating from the impulsive force. The rigid and lined centerbody predictions then show secondary acoustic pulses associated with reflections from the centerbody. The amplitude of the reflected pulse from the acoustically treated centerbody is substantially weaker than that from the rigid centerbody.

Turning then to Figure 5 (observer location on the opposite side of the centerbody as the impulsive force), relative to the no scattering prediction, the rigid centerbody shows a slight reduction in the amplitude of the acoustic pulse. This is presumably due to the "shielding" provided by the centerbody. For the case with the acoustically treated centerbody there is a substantial reduction in the amplitude of the pulse.

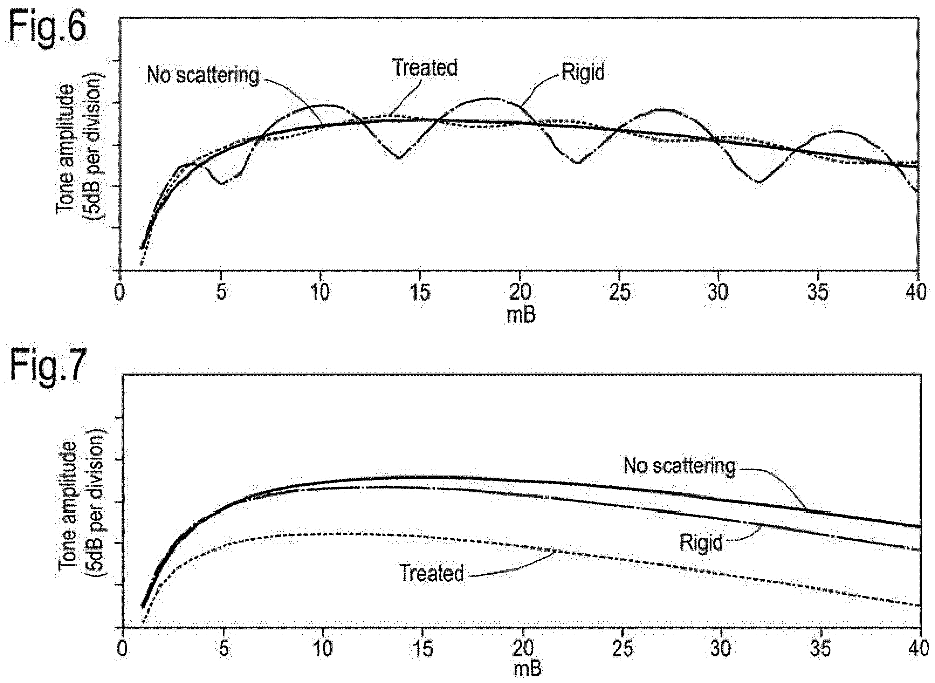

The corresponding acoustic spectra for the acoustically treated, rigid and no scattering cases are also plotted in Figures 6 and 7 as tone amplitude against mB (i.e. tone number x number of blades). When the observer is located on the same side of the cylinder as the impulsive force (Figure 6), the rigid centerbody appears to substantially change the sound pressure spectrum relative to the no scattering prediction, while the acoustically treated centerbody appears to produce only a relatively small change. However, it should be born in mind that there is only a relatively small reflected acoustic pulse at this observer position. For the case of an observer on the opposite side of the centerbody (Figure 7), the rigid centerbody has little effect on the amplitude of the low frequency acoustic harmonics relative to the no scattering prediction, although higher harmonics are reduced by approximately 4dB. In contrast, there is a significant reduction in the tone amplitude for the acoustically treated case.

The above analysis uses a point force model to demonstrate the benefit of acoustically treating the centrebody to reduce the level of noise caused by interactions tones. It would be straightforward for the skilled person to extend the analysis to a full open rotor model.

With a more elaborate model, and indeed with experimental testing, it can be possible to specify desirable characteristics of the acoustic treatment. For example, the acoustic treatment (comprising e.g. acoustic panels) can be tuned to reduce the interaction tones which make the largest contribution to the total sound power, e.g. at far-field. Further, providing an acoustic treatment which reduces the reflection coefficient at a normal angle of incidence tends to be effective at reducing the total sound power.

In summary, a rigid centrebody (i.e. engine nacelle) has a significant effect on "interaction tones" produced by the interaction of an open rotor with the wake or potential field of an adjacent pylon, engine exhaust or open rotor. These interaction tones are believed to be significant sources of noise from an open rotor. Therefore, acoustically treating the exterior surface of the centrebody (e.g. by the provision of acoustic panels) can reduce the scattered part of the sound field, and thereby significantly reduce the total radiated sound field. The acoustic treatment may additionally produce small, but useful, reductions in rotor alone tones and broadband noise levels.

**Claims**

1. An aeronautical propulsor having:

   a core engine (11),
   one or more open rotors (23, 24) driven by the engine, and
   a nacelle (21) which encloses the core engine and provides an aerodynamic external surface, **characterized**

**in that**
at least a portion of the external surface of the nacelle is formed by one or more acoustic panels so as to be acoustically treated to attenuate noise produced by the open rotors, the or each acoustic panel comprising a perforated outer layer covering a cellular or fibrous inner layer.

2. An aeronautical propulsor according to claim 1, wherein the external surface of the nacelle (21) adjacent the open rotors (23, 24) is acoustically treated.

3. An aeronautical propulsor according to claim 1 or claim 2, wherein the core engine (11) is a gas turbine engine.

4. An aeronautical propulsor according to any one of the previous claims having contra-rotating open rotors (23, 24).


**Patentansprüche**

1. Aeronautischer Propulsor, mit:

   einem Kernmotor (11),
   einem oder mehreren offenen Rotoren (23, 24), die durch den Motor angetrieben werden; und
   einer Verkleidung (21), welche den Kernmotor einschließt und eine aerodynamische äußere Oberfläche bereitstellt, **dadurch gekennzeichnet, dass**
   wenigstens ein Teil der äußeren Oberfläche der Verkleidung durch ein oder mehrere Akustikplatten ausgebildet ist, für eine akustische Behandlung zur Dämpfung der durch die offenen Rotoren erzeugten Geräusche, wobei die oder jede Akustikplatte eine perforierte äußere Schicht umfasst, welche eine zellulare oder faserige innere Schicht bedeckt.

2. Aeronautischer Propulsor nach Anspruch 1, wobei die äußere Oberfläche der Verkleidung (21) angrenzend an die offenen Rotoren (23, 24) akustisch behandelt ist.

3. Aeronautischer Propulsor nach Anspruch 1 oder 2, wobei der Kernmotor (11) ein Gasturbinenmotor ist.

4. Aeronautischer Propulsor nach einem der vorstehenden Ansprüche, mit gegenläufigen offenen Rotoren (23, 24).


**Revendications**

1. Propulseur aéronautique ayant :

   un réacteur de base (11),
   un ou plusieurs rotors ouverts (23, 24) entraînés par le réacteur, et
   une nacelle (21) qui renferme le réacteur de base et présente une surface externe aérodynamique, **caractérisée en ce que**
   au moins une partie de la surface externe de la nacelle est formée par un ou plusieurs panneaux acoustiques de sorte à être traitée acoustiquement pour atténuer le bruit produit par les rotors ouverts, le ou chaque panneau acoustique comprenant une couche externe perforée couvrant une couche interne cellulaire ou fibreuse.

2. Propulseur aéronautique selon la revendication 1, la surface externe de la nacelle (21) adjacente aux rotors ouverts (23, 24) étant traitée acoustiquement.

3. Propulseur aéronautique selon la revendication 1 ou 2, le réacteur de base (11) étant une turbine à gaz.

4. Propulseur aéronautique selon l'une quelconque des revendications précédentes ayant des rotors ouverts (23, 24) contrarotatifs.

# Fig.1

Fig.2

Fig.3

Fig.4

No scattering

Treated

Rigid

Fig.5

No scattering

Rigid

Treated

EP 2 481 669 B1

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2918984 A
- US 2009202357 A
- DE 8713745
- US 2009045009 A

**Non-patent literature cited in the description**

- **S. A. L. GLEGG.** Effect of Centerbody Scattering on Propeller Noise. *AIAA Journal,* 1991, vol. 29, 572-576